# EUROPEAN PATENT APPLICATION

(11) **EP 4 796 465 A1**
(43) Date of publication of application: **26.08.2026**
(21) Application number: 23956132.7
(22) Date of filing: 20.10.2023
(51) Int. Cl.: B65G 1/137

(54) **CONVEYANCE SYSTEM AND CONVEYANCE METHOD**

(71) Applicant: Fuji Corporation, Chiryu-shi, Aichi 472-8686 (JP)
(72) Inventor: ODA Takuya, Chiryu-shi, Aichi 472-8686 (JP); KAWAGUCHI Koji, Chiryu-shi, Aichi 472-8686 (JP); SAWANAMI Hisato, Chiryu-shi, Aichi 472-8686 (JP); KITO Shuichiro, Chiryu-shi, Aichi 472-8686 (JP)
(74) Representative: Grünecker Patent- und Rechtsanwälte PartG mbB
(86) International application number: PCT/JP2023/038032
(87) International publication number: WO 2025/083885

(57) **Abstract**

A conveyance system includes an automated guided vehicle, a storage section configured to store conveyance destination information in which a category of a product and a conveyance destination are associated with each other, a recognition section provided in the automated guided vehicle and configured to recognize a product loaded on a cart, a setting section configured to acquire a corresponding conveyance destination from the conveyance destination information stored in the storage section based on a category to which the product recognized by the recognition section belongs, and set the acquired conveyance destination as a target location of the cart, and a control section configured to control the automated guided vehicle such that the cart is conveyed to the target location set by the setting section.

## Description

### Technical Field

The present description discloses a conveyance system and a conveyance method.

### Background Art

Conventionally, a conveyance system that conveys a package is known. For example, Patent Literature 1 discloses a mobile robot that captures an image of a load with a camera, identifies a type of the load based on the captured image, determines a target location based on information (content information) indicating the type, and conveys the load to the determined target location.

### Citation List

### Patent Literature

Patent Literature 1: JP-A-2021-196620

### Summary of the Invention

### Technical Problem

When a product is loaded on a cart and conveyed, it is necessary to convey the product on a cart basis, but Patent Literature 1 does not mention setting a conveyance destination for each cart.

A main object of the present disclosure is to appropriately convey a product for each cart when the product is loaded on the cart and conveyed.

### Solution to Problem

The present disclosure adopts the following means to achieve the above-described object.

A conveyance system according to the present disclosure is
a conveyance system including
an automated guided vehicle configured to convey a cart,
a storage section configured to store conveyance destination information in which a category of a product and a conveyance destination are associated with each other,
a recognition section provided in the automated guided vehicle and configured to recognize a product loaded on the cart,
a setting section configured to acquire a corresponding conveyance destination from the conveyance destination information stored in the storage section based on a category to which the product recognized by the recognition section belongs, and set the acquired conveyance destination as a target location of the cart, and
a control section configured to control the automated guided vehicle such that the cart is conveyed to the target location set by the setting section.

In the conveyance system of the present disclosure, the conveyance destination information in which the category of the product and the conveyance destination are associated with each other is stored in advance, the product loaded on the cart is recognized, the corresponding conveyance destination is acquired from the conveyance destination information, based on the category to which the recognized product belongs, and the acquired conveyance destination is set as the target location of the cart. Accordingly, when the product is loaded on the cart and conveyed, the product can be appropriately conveyed for each cart.

A conveyance method according to the present disclosure is
a conveyance method for conveying a cart by using an automated guided vehicle, the conveyance method includes
storing, in advance, conveyance destination information in which a category of a product and a conveyance destination are associated with each other;
recognizing a product loaded on the cart;
acquiring a corresponding conveyance destination from the conveyance destination information, based on a category to which the recognized product belongs;
setting the acquired conveyance destination as a target location of the cart; and
controlling the automated guided vehicle such that the cart is conveyed to the set target location.

The conveyance method of the present disclosure can achieve the same effect as that of the conveyance system of the present disclosure.

### Brief Description of Drawings

Fig. 1 is an external perspective view of multiple caged carts and an automated guided vehicle that conveys the caged carts that are disposed in a cart storage place of a shop or the like.
Fig. 2 is an external perspective view of the automated guided vehicle and the caged cart.
Fig. 3 is an external perspective view of the automated guided vehicle.
Fig. 4 is a side view of the automated guided vehicle.
Fig. 5 is a side view of the automated guided vehicle.
Fig. 6 is a view illustrating a state in which the automated guided vehicle has entered under the caged cart.
Fig. 7 is a view illustrating a state in which the automated guided vehicle is coupled to the caged cart.
Fig. 8 is a block diagram of a conveyance system including the automated guided vehicle and a management device.
Fig. 9 is a view illustrating an example of product information.
Fig. 10 is a view illustrating an example of conveyance destination information.
Fig. 11 is a flowchart illustrating an example of a conveyance control routine.
Fig. 12 is a flowchart illustrating an example of target location setting processing.
Fig. 13 is a view illustrating an example of the caged cart loaded with multiple products belonging to the same product category.
Fig. 14 is a view illustrating an example of the caged cart loaded with multiple products belonging to different product categories.
Fig. 15 is a view illustrating an example of the caged cart loaded with multiple products belonging to different product categories.
Fig. 16 is a view illustrating an example of a conveyance destination area for each product category on a map.
Fig. 17 is a flowchart illustrating target location setting processing according to another embodiment.

### Description of Embodiments

Next, an embodiment of the present disclosure will be described with reference to the drawings.

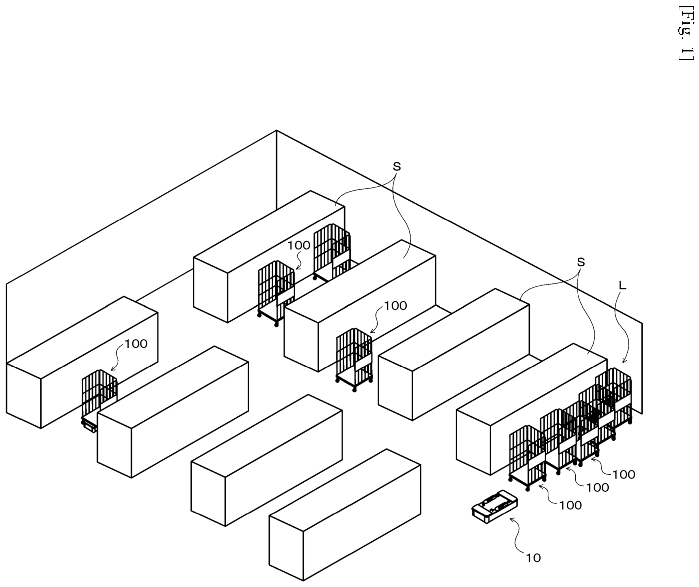

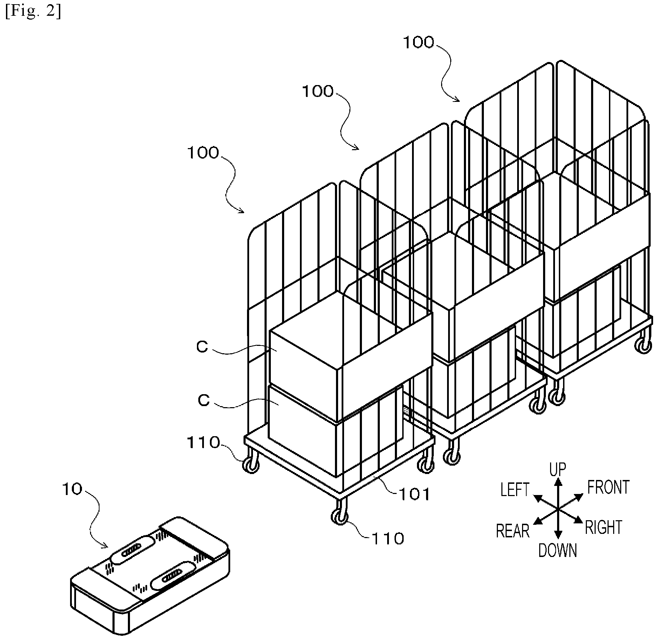

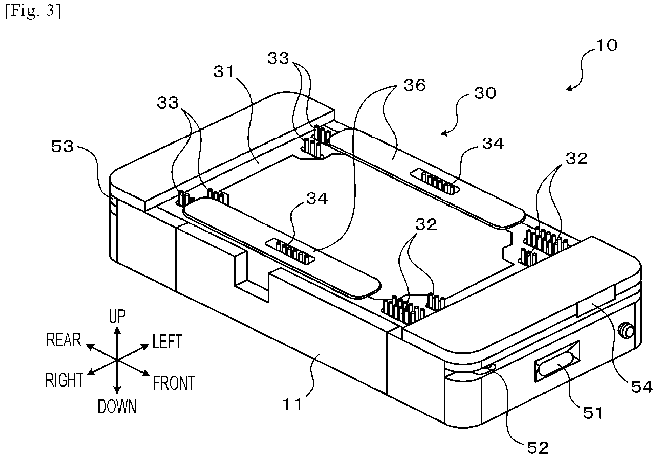

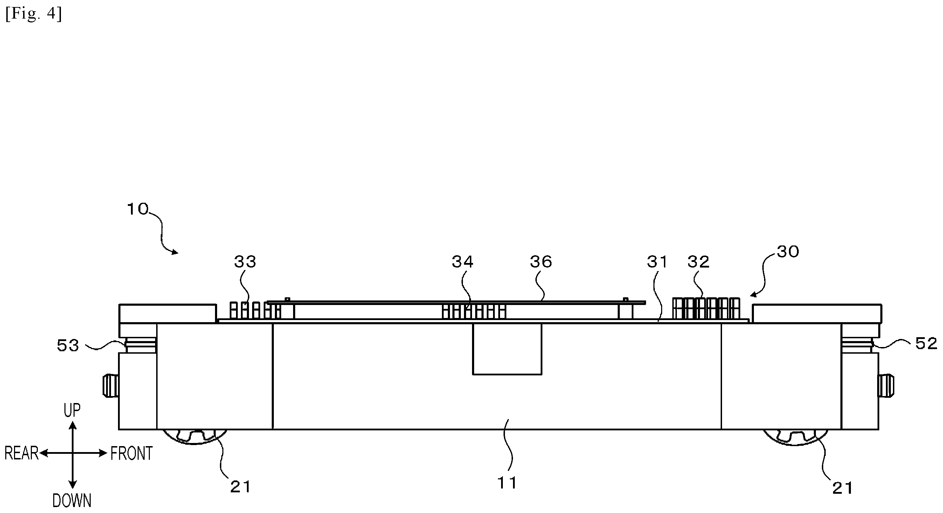

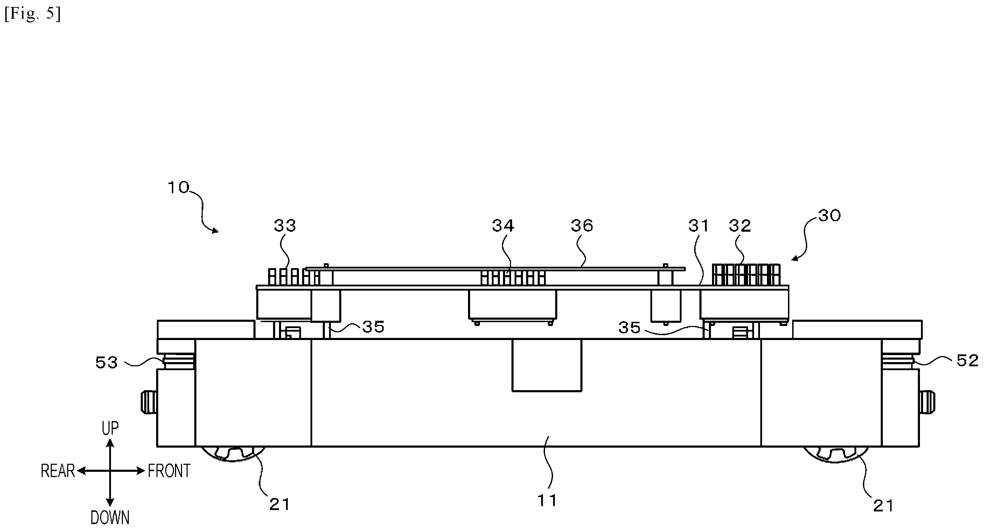

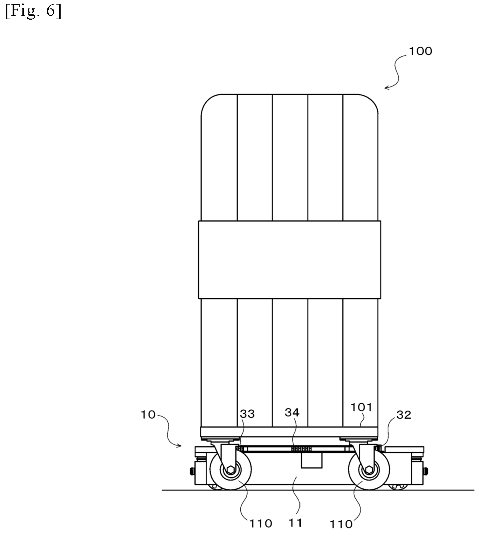

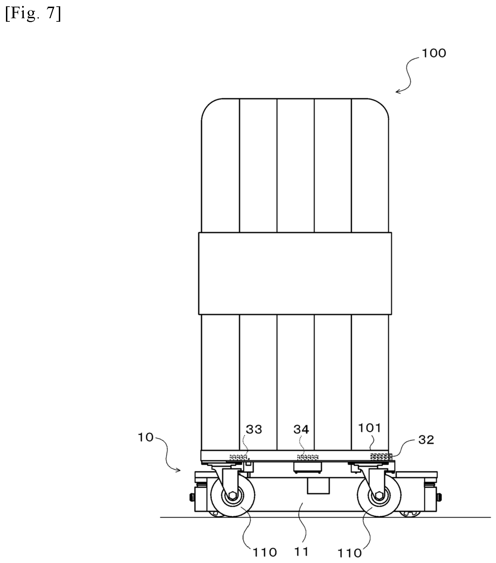

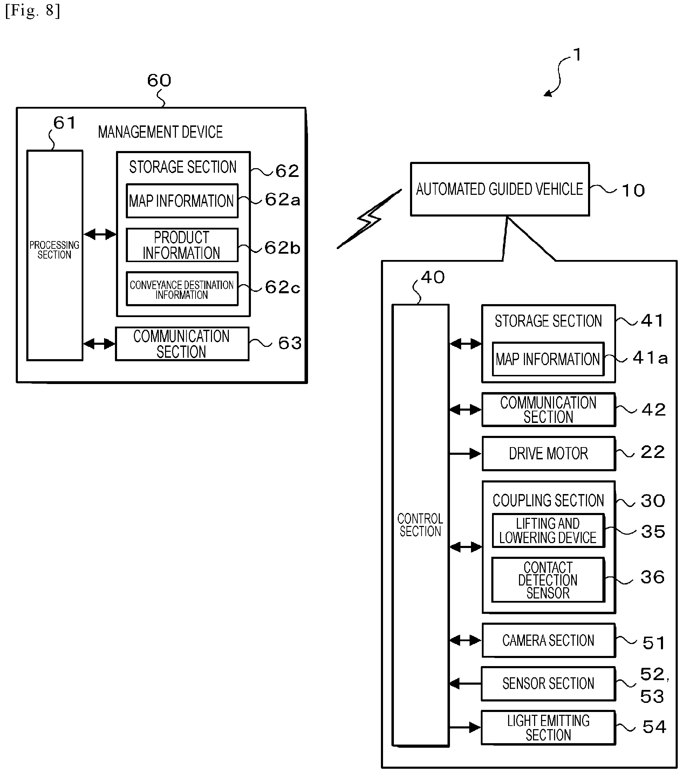

Fig. 1 is an external perspective view of multiple caged carts 100 and automated guided vehicle 10 that conveys caged carts 100 that are disposed in cart storage place L of a shop or the like. Fig. 2 is an external perspective view of caged cart 100 and automated guided vehicle 10. Fig. 3 is an external perspective view of automated guided vehicle 10. Figs. 4 and 5 are side views of automated guided vehicle 10. Fig. 6 is a view illustrating a state in which automated guided vehicle 10 has entered under caged cart 100. Fig. 7 is a view illustrating a state in which automated guided vehicle 10 is coupled to caged cart 100. Fig. 8 is a block diagram of conveyance system 1 including automated guided vehicle 10 and management device 60.

As illustrated in Fig. 1, conveyance system 1 of the present embodiment is a system that is used in a distribution center, a warehouse, a shop, or the like having multiple shelves S, and includes one or more automated guided vehicles 10 and management device 60 (see Fig. 8) that manages an operation of automated guided vehicles 10. Automated guided vehicle 10 is an autonomous mobile robot (AMR) that is coupled to caged cart 100 and that conveys caged cart 100 to designated shelf S.

For example, as illustrated in Fig. 2, caged cart 100 includes rectangular and net-like loading platform portion 101 capable of loading product C, and multiple (four) casters 110 rotatably attached to four corners of a lower surface of loading platform portion 101. Automated guided vehicle 10 recognizes product C loaded on caged cart 100 and conveys caged cart 100 to a designated conveyance destination. The recognition of product C is performed by capturing an image of product C by using camera section 51 and processing the captured image to recognize identification information of product C. The identification information of product C includes a product identification code such as a Japanese Article Number (JAN) code or a character string of a product name written on product C or an outer case of product C, outer shape (contour) data of product C without an outer case, other identification information assigned to each product C in a distribution center, and the like.

As illustrated in Fig. 3, automated guided vehicle 10 of the present embodiment has a flat rectangular parallelepiped appearance with a low height. Automated guided vehicle 10 includes vehicle body portion 11, multiple (for example, four) wheels 21 rotatably attached to a bottom surface of vehicle body portion 11, and multiple (for example, four) drive motors 22 (see Fig. 8) that respectively rotate and drive corresponding wheels 21. In the present embodiment, multiple wheels 21 are configured as mecanum wheels having multiple rollers rotatable around an axis inclined by 45 degrees with respect to a rotation axis of the wheel on an outer periphery of the wheel. Automated guided vehicle 10 can move vehicle body portion 11 in all directions or make vehicle body portion 11 turn (such as a spin turn, a pivot turn, or a power turn) by independently controlling rotation directions and rotation speeds of corresponding wheels 21 with multiple drive motors 22. Multiple wheels 21 may also be configured as omni wheels having multiple rollers that are rotatable around an axis that three-dimensionally intersects a rotation axis of the wheel. In other words, multiple wheels 21 may be any type of wheel as long as the wheels are capable of moving or turning vehicle body portion 11 in multiple directions.

In addition, as illustrated in Figs. 3 to 5, automated guided vehicle 10 includes coupling section 30 that is provided on an upper surface of vehicle body portion 11 and that can be coupled to caged cart 100 in a state in which vehicle body portion 11 has entered under caged cart 100. Coupling section 30 includes plate-shaped lifting and lowering plate 31, coupling pins 32, 33, and 34 provided to extend upward with respect to lifting and lowering plate 31, and lifting and lowering device 35 that lifts and lowers lifting and lowering plate 31. Lifting and lowering plate 31 has a left-right width substantially equal to a left-right width of vehicle body portion 11 to cover the upper surface of vehicle body portion 11 and a front-rear width slightly shorter than a front-rear width of vehicle body portion 11. Coupling pin 32 is provided at a front portion of lifting and lowering plate 31, coupling pin 33 is provided at a rear portion of lifting and lowering plate 31, and coupling pin 34 is provided at an intermediate portion between the front portion and the rear portion of lifting and lowering plate 31. As illustrated in Figs. 6 and 7, in coupling section 30, lifting and lowering plate 31 is lifted by lifting and lowering device 35 in a state where vehicle body portion 11 has entered under caged cart 100, thereby at least one of coupling pins 32, 33, and 34 engages with an underside of loading platform portion 101 of caged cart 100. Accordingly, automated guided vehicle 10 and caged cart 100 are coupled to each other, and automated guided vehicle 10 can convey (tow) caged cart 100.

As illustrated in Figs. 3 to 5, contact detection sensors 36 (spring sensors) for detecting that coupling section 30 (coupling pins 32, 33, and 34) is in contact with (coupled to) loading platform portion 101 of caged cart 100 are provided on both left and right sides of lifting and lowering plate 31. Contact detection sensor 36 includes a plate that is biased upward by a spring, with its upper end positioned at approximately the same height as coupling pins 32, 33, and 34 with respect to lifting and lowering plate 31. When coupling pins 32, 33, and 34 are engaged with loading platform portion 101 of caged cart 100, the plate of contact detection sensor 36 comes into contact with loading platform portion 101, and is lowered relative to coupling pins 32, 33, and 34 while the spring is compressed. Contact detection sensor 36 detects that coupling section 30 is in contact with (coupled to) loading platform portion 101 of caged cart 100 by detecting a state where the plate is relatively lowered.

Furthermore, as illustrated in Fig. 8, automated guided vehicle 10 includes control section 40 that performs overall control, storage section 41 that stores various information including map information 41a, communication section 42 for performing communication (wireless communication) with management device 60, camera section 51 as an imaging device, sensor sections 52 and 53, and light emitting section 54 that illuminates an area ahead of vehicle body portion 11. Camera section 51 is installed on a front surface of vehicle body portion 11 to recognize the area ahead of vehicle body portion 11. Sensor sections 52 and 53 are installed on the front surface and a rear surface of vehicle body portion 11, respectively, to detect a surrounding object or a distance to the object. In the present embodiment, as sensor sections 52 and 53, a light detection and ranging (LiDAR) sensor is used that scans the surrounding area with laser light, receives each reflected light, and measures a time until the reflected light is received, thereby measuring distance data for each scanning angle to obtain two-dimensional point cloud data of surroundings. Light emitting section 54 is installed on the front surface of vehicle body portion 11, and illuminates the area ahead to make it easier for camera section 51 to recognize surrounding objects in dark environments.

Control section 40 is configured as a microprocessor centered on CPU, and includes ROM storing a processing program, RAM temporarily storing data, a timing section, and the like in addition to the CPU. As illustrated in Fig. 8, an image signal from camera section 51, detection signals from sensor sections 52 and 53, a detection signal from contact detection sensor 36, and the like are input to control section 40. Control section 40 outputs a control signal to drive motor 22, a control signal to lifting and lowering device 35, a control signal to camera section 51, a control signal to light emitting section 54, and the like.

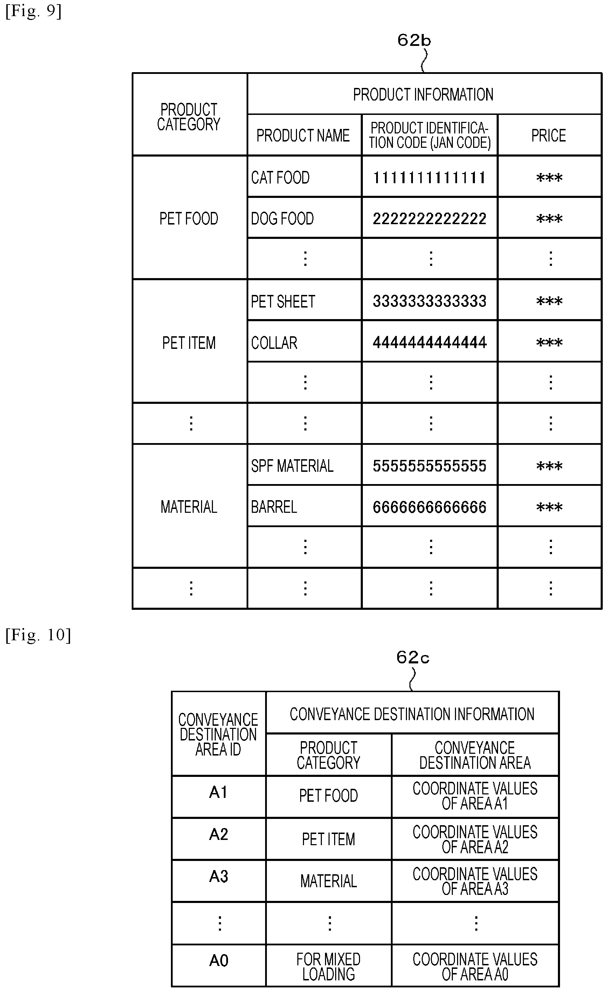

As illustrated in Fig. 8, management device 60 includes processing section 61, storage section 62, and communication section 63 for performing communication (wireless communication) with each automated guided vehicle 10. Processing section 61 is configured as a microprocessor centered on CPU, and includes ROM storing a processing program, RAM temporarily storing data, and the like in addition to the CPU. Storage section 62 is a storage such as an HDD or an SSD, and storage section 62 stores various information such as product information 62b (see Fig. 9) and conveyance destination information 62c (see Fig. 10) in addition to map information 62a.

As illustrated in Fig. 9, product information 62b includes a product name, a product identification code (JAN code), and a product price, and is stored for each product category. Although not illustrated, product information 62b also includes outer shape data for specifying a product name by an outer shape (contour) of a product in a specific product category (for example, a product without an outer case). As illustrated in Fig. 10, conveyance destination information 62c includes a product category and coordinate values of a conveyance destination area, and is stored for each conveyance destination area ID for identifying the conveyance destination area. The conveyance destination area is, for example, a rectangular area. The coordinate values of the conveyance destination area are given as, for example, coordinate values (x, y) of each vertex of the conveyance destination area (rectangle) from the origin on a map in an XY orthogonal coordinate system of the map.

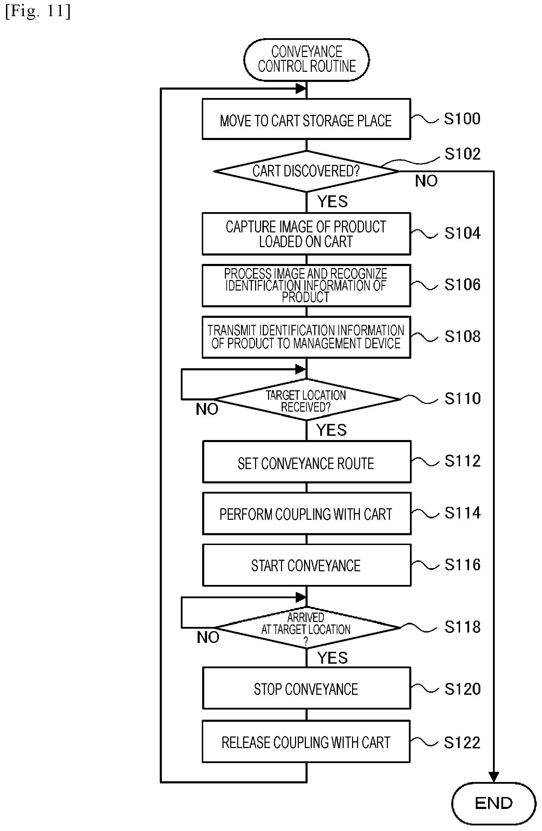

Next, an operation of conveyance system 1 of the present embodiment configured in this manner will be described. In particular, as illustrated in Fig. 1, an operation of automated guided vehicle 10 when conveying multiple caged carts 100 disposed in cart storage place L one by one to each conveyance destination will be described. Fig. 11 is a flowchart illustrating an example of a conveyance control routine executed by control section 40 of automated guided vehicle 10. This process is executed when management device 60 instructs the conveyance of caged cart 100 (product).

When the conveyance control routine is executed, control section 40 first causes drive motor 22 to operate such that automated guided vehicle 10 moves to cart storage place L (S100). Subsequently, control section 40 determines whether caged cart 100 is recognized by searching the vicinity (S102). The search for the surroundings is performed by determining whether a characteristic portion (for example, caster 110) of caged cart 100 can be recognized using camera section 51 and sensor section 52. When it is determined that caged cart 100 cannot be recognized, control section 40 ends the conveyance control routine.

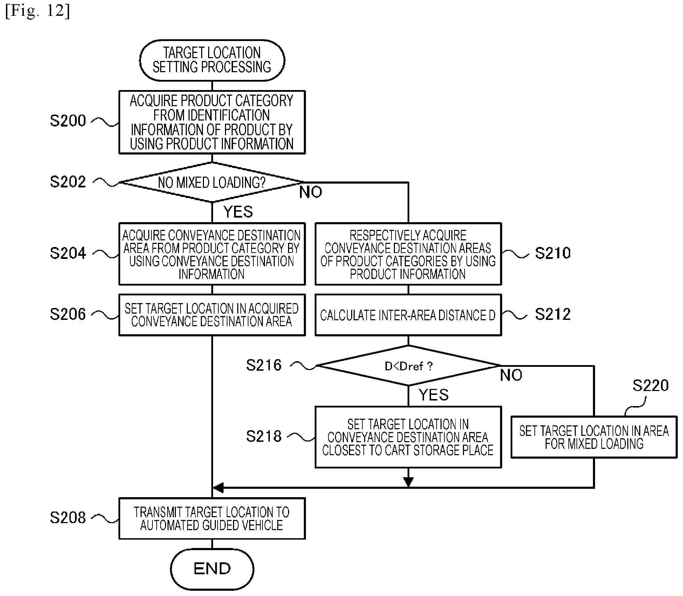

To the contrary, when it is determined that caged cart 100 can be recognized, control section 40 captures an image of product C loaded on caged cart 100 by using camera section 51 (S104). Subsequently, control section 40 processes the captured image and recognizes identification information (for example, a product identification code, a product name, and outer shape data) of product C (S106). For example, when a character string of a product name described in an outer case is recognized as the identification information of product C, the product name is recognized by using optical character recognition (OCR). When the outer shape of product C is recognized as the identification information of product C, the recognition of the outer shape is performed for each object region by using semantic segmentation for dividing an object region in units of pixels. Then, control section 40 transmits the identification information of recognized product C to management device 60 (S108). When multiple pieces of identification information of product C are recognized in the captured image, control section 40 transmits the recognized multiple pieces of identification information to management device 60. Management device 60 sets a target location of caged cart 100 loaded with product C from the received identification information of product C by executing target location setting processing illustrated in Fig. 12. Hereinafter, details of the target location setting processing will be described.

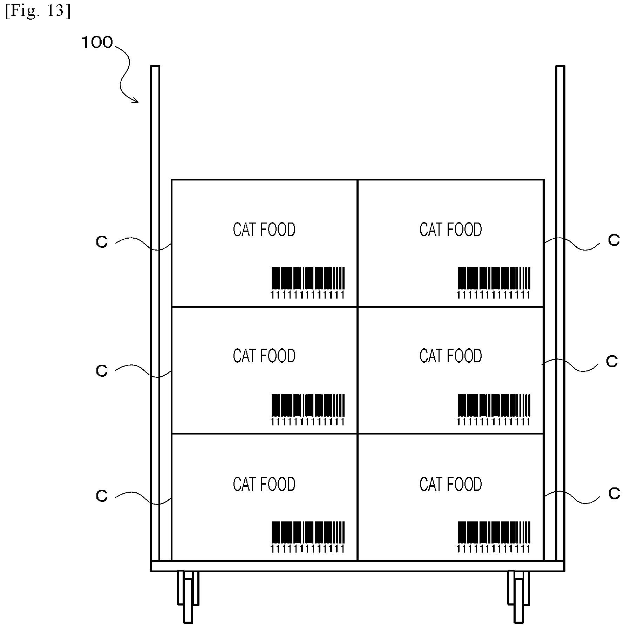

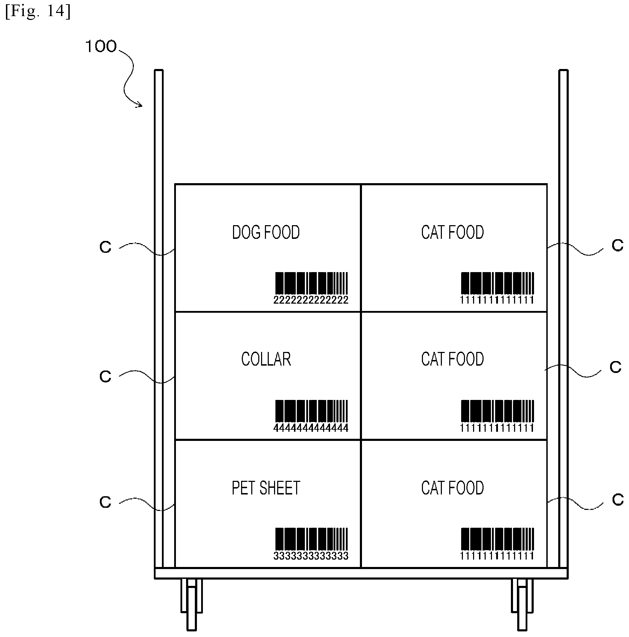

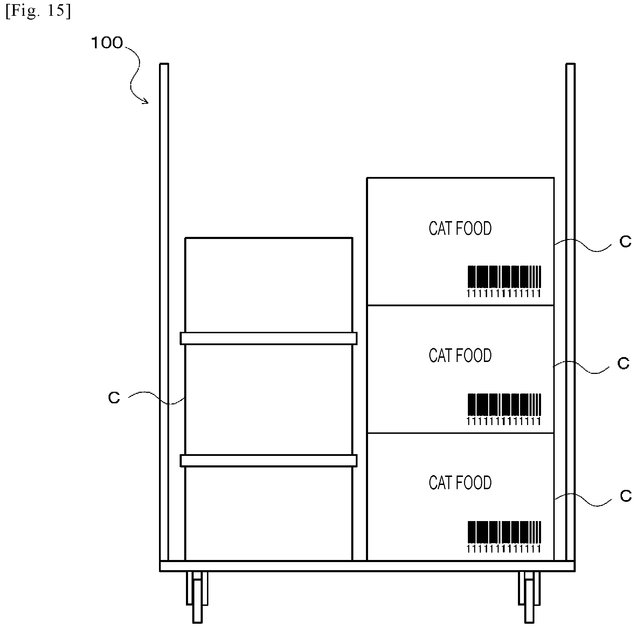

In the target location setting processing, processing section 61 of management device 60 first acquires a corresponding product category from the identification information of product C received by using product information 62b (S200). When receiving multiple pieces of identification information of product C from control section 40, processing section 61 acquires product categories respectively corresponding to the pieces of identification information. Subsequently, processing section 61 determines whether multiple products C belonging to different product categories are mixed in caged cart 100 to be conveyed (S202). This processing is performed by determining whether there are different product categories among the product categories corresponding to the pieces of identification information when the multiple pieces of identification information of product C are received from control section 40. Cases where multiple products loaded on caged cart 100 belong to the same product category include a case where the product names are the same (see Fig. 13) and a case where the product names are different but the products belong to the same product category. Cases where multiple products loaded on caged cart 100 belong to different product categories include a case where both the product names and the product categories are different (see Figs. 14 and 15). When it is determined that there is no mixed product belonging to a different product category, processing section 61 acquires a corresponding conveyance destination area from the product category by using conveyance destination information 62c (S204), and sets the target location of caged cart 100 in the acquired conveyance destination area (S206). Specifically, when there is no conveyed caged cart 100 in a target conveyance destination area, processing section 61 sets a predetermined position set in advance in the conveyance destination area as the target location, and when there is conveyed caged cart 100 in the target conveyance destination area, processing section 61 sets the target location such that caged cart 100 is aligned in a predetermined direction with a certain clearance from the predetermined position of the conveyance destination area with respect to conveyed caged cart 100. Then, processing section 61 transmits the set target location to control section 40 of automated guided vehicle 10 (S208), and ends the present processing.

When it is determined in S202 that there are mixed products of different product categories, processing section 61 respectively acquires conveyance destination areas of different product categories by using product information 62b (S210). Subsequently, processing section 61 calculates the distance between conveyance areas (inter-area distance D) based on the acquired coordinate values of each conveyance destination area (S212). Inter-area distance D may be calculated by calculating a linear distance between the conveyance destination areas or by calculating a length of a route connecting the conveyance destination areas in a travelable route on the map. Then, processing section 61 determines whether inter-area distance D is less than predetermined distance Dref (S216). When it is determined that inter-area distance D is less than predetermined distance Dref, processing section 61 determines that the conveyance destinations of products C mixed in caged cart 100 are close to each other, and sets the target location in the conveyance destination area closest to cart storage place L among the conveyance areas acquired in S210 (S218). To the contrary, when it is determined that inter-area distance D is equal to or greater than predetermined distance Dref, processing section 61 determines that the conveyance destinations of products C mixed in caged cart 100 are separated from each other, and sets the target location in predetermined area A0 for mixed loading set in advance (S220). The target location in the conveyance destination area can be set in the same manner as in S206 described above. Then, processing section 61 transmits the set target location to control section 40 of automated guided vehicle 10 (S208), and ends the present processing.

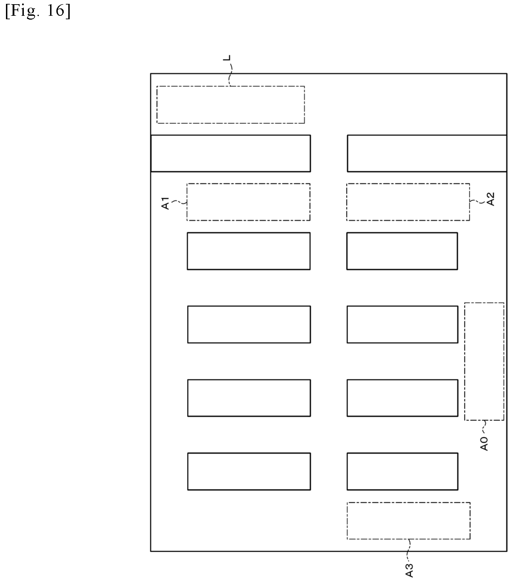

Fig. 16 is a view illustrating a conveyance destination area for each product category on the map. For example, as shown in Fig. 14, when products C mixed in caged cart 100 are "CAT FOOD", "DOG FOOD", "COLLAR", and "PET SHEET" and product categories thereof are "PET FOOD" and "PET ITEM", area A1 and area A2, which are the conveyance destination areas, are close to each other (see Figs. 10 and 16). Therefore, the target location of caged cart 100 is set in area A1 which is closer to cart storage place L among areas A1 and A2. As shown in Fig. 15, when products C mixed in caged cart 100 are "CAT FOOD" and "BARREL" and product categories thereof are "PET FOOD" and "MATERIAL", area A1 and area A3, which are the conveyance destination areas, are separated from each other (see Figs. 10 and 15). Therefore, the target location of caged cart 100 is set in area A0 for mixed loading. The target location setting processing has been described above.

Returning to the conveyance control routine, control section 40 waits for reception of the target location of caged cart 100 from management device 60 (S110). Upon receiving the target location, control section 40 sets a conveyance route from a current location to the target location (S112). The conveyance route is set by recognizing the current position of automated guided vehicle 10 by sensor sections 52 and 53 and searching the route based on the recognized current position, the set target location, and map information 41a. In the present embodiment, conveyed caged cart 100 is registered as an obstacle at a position (coordinates) of that caged cart 100, and the conveyance route is set by setting a shortest route except for a route that cannot be passed due to the obstacle among the searched routes from the current location to the target location. In the setting of the conveyance route, control section 40 of automated guided vehicle 10 may transmit the current location of automated guided vehicle 10 to management device 60, so that management device 60 sets the conveyance route based on the set target location, the received current location, and map information 62a and transmits the conveyance route to automated guided vehicle 10.

When the conveyance route is set, control section 40 performs coupling to caged cart 100 (S114), and controls drive motor 22 such that conveyance of caged cart 100 from the current location to the target location along the conveyance route is started (S116). The coupling of caged cart 100 is performed by entering under caged cart 100, lifting coupling pins 32, 33, and 34 by using lifting and lowering device 35, and engaging coupling pins 32,33, and 34 with loading platform portion 101 of caged cart 100.

Next, control section 40 determines whether automated guided vehicle 10 has arrived at the target location while checking the position of automated guided vehicle 10 (S118). When it is determined that automated guided vehicle 10 has arrived at the target location, control section 40 controls drive motor 22 such that the conveyance is stopped (S120), and then releases the coupling with caged cart 100 (S122). Specifically, control section 40 releases the coupling with caged cart 100 by lowering coupling pin 32, 33, and 34 by using lifting and lowering device 35. Then, control section 40 returns to S100 to convey next caged cart 100. As described above, automated guided vehicle 20 repeats the operation of performing coupling with caged cart 100 disposed in cart storage place L, conveying caged cart 100 to the conveyance destination, and returning to cart storage place L and conveying next caged cart 100 when the conveyance to the conveyance destination is completed. Then, when it is determined in S102 that caged cart 100 cannot be recognized in cart storage place L, control section 40 ends the present routine.

Here, a correspondence relationship between main elements of the embodiment and main elements of the present disclosure described in Claims will be described. That is, caged cart 100 of the present embodiment is an example of a cart of the present disclosure, automated guided vehicle 10 is an example of an automated guided vehicle, storage section 62 of management device 60 is an example of a storage section, camera section 51 of automated guided vehicle 10 and control section 40 that executes the processing of S104 and S106 of the conveyance control routine are examples of a recognition section, processing section 61 of management device 60 that executes the target location setting processing is an example of a setting section, and control section 40 that executes the processing of S110 to S122 of the conveyance control routine is an example of a control section.

It is needless to say that the present disclosure is not in any way limited to the above-described embodiment, and the present disclosure can be made into practice in various aspects as long as the aspects fall within the technical scope of the present disclosure.

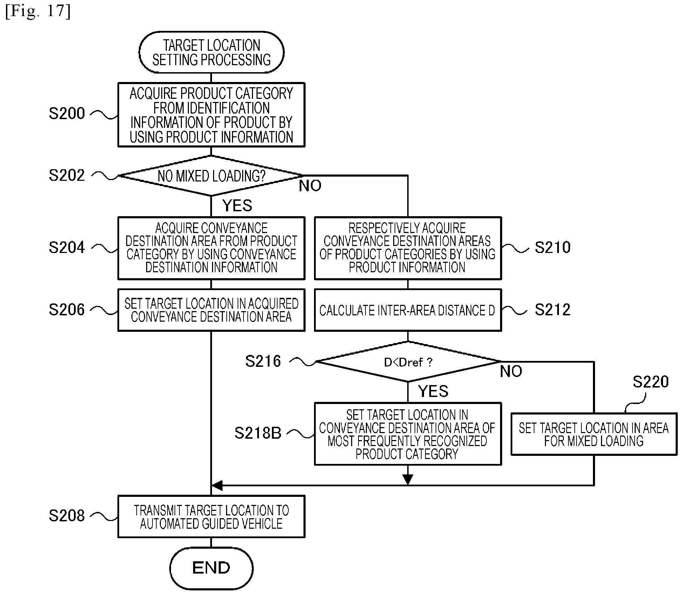

For example, in the above-described embodiment, when multiple products C belonging to different product categories are mixed in one caged cart 100, processing section 61 sets the target location in the conveyance destination area closest to cart storage place L among the conveyance destination areas respectively corresponding to the product categories. However, the present disclosure is not limited thereto, and processing section 61 may set the target location in the conveyance destination area having a highest priority among priorities assigned in advance to conveyance destination areas, among the conveyance destination areas respectively corresponding to the product categories. Further, as shown in S218B of the target location setting processing of Fig. 17, processing section 61 may set the target location in the conveyance destination area corresponding to the product category to which most frequently recognized product C among recognized products C belong. In this case, when the product category is the same, processing section 61 may set the target location in the conveyance destination area corresponding to the product category of product C most frequently recognized as the same product even when the product name (or the product identification code or the outer shape) is different. Alternatively, control section 40 may set the target location in the conveyance destination area corresponding to the product category of product C most frequently recognized with the same product name (or product identification code or outer shape).

In the above-described embodiment, processing section 61 sets the target location in area A0 for mixed loading when multiple products C belonging to different product categories are mixed in one caged cart 100 and inter-area distance D is equal to or greater than predetermined distance Dref in the conveyance destination area corresponding to each product category. However, when multiple products C belonging to different product categories are mixed, processing section 61 may set the target location in area A0 for mixed loading regardless of inter-area distance D. In this case, in the target location setting processing of Fig. 12, the processing of S210, S212, S216, and S218 need not be performed. In addition, even when multiple products C belonging to different product categories are mixed, processing section 61 may set the target location in a conveyance destination area corresponding to any product category without providing area A0 for mixed loading. In this case, in the target location setting processing of Figs. 12 and 17, S212, S216, and S220 need not be performed.

In the above-described embodiment, processing section 61 of management device 60 executes the target location setting processing. However, control section 40 of automated guided vehicle 10 may execute the target location setting processing by storing product information 62b and conveyance destination information 62c in storage section 41 of automated guided vehicle 10.

In the embodiment described above, automated guided vehicle 10 tows caged cart 100 by engaging coupling pin 34 of coupling section 30 with loading platform portion 101 of caged cart 100. However, automated guided vehicle 10 may lift caged cart 100 by using coupling section 30 and convey caged cart 100.

As described above, in a conveyance system of the present disclosure, conveyance destination information in which a category of a product and a conveyance destination are associated with each other is stored in advance, the product loaded on the cart is recognized, a corresponding conveyance destination is acquired from the conveyance destination information, based on a category to which the recognized product belongs, and the acquired conveyance destination is set as a target location of the cart. Accordingly, when the product is loaded on the cart and conveyed, the product can be appropriately conveyed for each cart.

In the conveyance system of the present disclosure, when the recognition section recognizes multiple products and there are multiple categories to which the multiple recognized products respectively belong, the setting section may set, as the target location, a conveyance destination corresponding to any one of the multiple categories according to a predetermined rule. In this way, even when multiple products belonging to different categories are mixed in one cart, the cart can be conveyed to an appropriate position. In this case, the setting section may set, as the target location, a conveyance destination closest to a position of the cart among multiple conveyance destinations corresponding to the multiple categories, as the predetermined rule. In this way, the cart can be efficiently conveyed. Alternatively, the setting section may set, as the target location, a conveyance destination corresponding to a category to which the most frequently recognized product belongs among the multiple products recognized by the recognition section, as the predetermined rule. In this way, when a product in a category that does not correspond to a conveyance destination is included in the conveyance destination, it is possible to further reduce a burden on a worker required to move the product.

In the conveyance system of the present disclosure, when the recognition section recognizes multiple products and there are multiple categories to which the multiple recognized products respectively belong, the setting section may set, as the target location, a conveyance destination set in advance, regardless of the categories. In this way, it is possible to prevent the product from being conveyed to a conveyance destination that does not correspond to the category to which the product belongs.

In the conveyance system of the present disclosure, the recognition section may recognize a character string or a product code applied to a product or a container storing the product, or a shape of the product. In this way, the recognition section can more reliably recognize the product without using a marker or the like.

Although the present disclosure is applied to the conveyance system, the present disclosure may be applied to a conveyance method for conveying a cart using an automated guided vehicle.

The present description also discloses a technical idea in which "the conveyance system according to Claim 1" in Claim 5 as originally filed is changed to "the conveyance system according to any one of Claims 1 to 4".

### Industrial Applicability

The present disclosure can be used in an industry for manufacturing a conveyance system and the like.

### Reference Signs List

1: conveyance system, 10: automated guided vehicle, 11: vehicle body portion, 21: wheel, 22: drive motor, 30: coupling section, 31: lifting and lowering plate, 32, 33, 34: coupling pin, 35: lifting and lowering device, 36: contact detection sensor, 40: control section, 41: storage section, 41a: map information, 42: communication section, 51: camera section, 52, 53: sensor section, 54: light emitting section, 60: management device, 61: processing section, 62: storage section, 62a: map information, 62b: product information, 62c: conveyance destination information, 63: communication section, 65: input section, 66: display section, 100: caged cart, 101: loading platform portion, 110: caster, C: product, L: cart storage place, S: shelf, A0, A1, A2, A3: area.

## Claims

1. A conveyance system comprising:
an automated guided vehicle configured to convey a cart;
a storage section configured to store conveyance destination information in which a category of a product and a conveyance destination are associated with each other;
a recognition section provided in the automated guided vehicle and configured to recognize a product loaded on the cart;
a setting section configured to acquire a corresponding conveyance destination from the conveyance destination information stored in the storage section based on a category to which the product recognized by the recognition section belongs, and set the acquired conveyance destination as a target location of the cart; and
a control section configured to control the automated guided vehicle such that the cart is conveyed to the target location set by the setting section.

2. The conveyance system according to Claim 1, wherein when the recognition section recognizes multiple products and there are multiple categories to which the multiple recognized products respectively belong, the setting section sets, as the target location, a conveyance destination corresponding to any one of the multiple categories according to a predetermined rule.

3. The conveyance system according to Claim 2, wherein the setting section sets, as the target location, a conveyance destination closest to a position of the cart among multiple conveyance destinations corresponding to the multiple categories, as the predetermined rule.

4. The conveyance system according to Claim 2, wherein the setting section sets, as the target location, a conveyance destination corresponding to a category to which the most frequently recognized product belongs among the multiple products recognized by the recognition section, as the predetermined rule.

5. The conveyance system according to Claim 1, wherein when the recognition section recognizes multiple products and there are multiple categories to which the multiple recognized products respectively belong, the setting section sets, as the target location, a conveyance destination set in advance, regardless of the categories.

6. The conveyance system according to any one of Claims 1 to 5, wherein the recognition section recognizes a character string or a product code applied to the product or a container storing the product, or a shape of the product.

7. A conveyance method for conveying a cart by using an automated guided vehicle, the conveyance method comprising:
storing, in advance, conveyance destination information in which a category of a product and a conveyance destination are associated with each other;
recognizing a product loaded on the cart;
acquiring a corresponding conveyance destination from the conveyance destination information, based on a category to which the recognized product belongs;
setting the acquired conveyance destination as a target location of the cart; and
controlling the automated guided vehicle such that the cart is conveyed to the set target location.
